(19) Europäisches Patentamt
European Patent Office
Office européen des brevets

(11) Numéro de publication : **0 296 904 B1**

(12) **FASCICULE DE BREVET EUROPEEN**

(45) Date de publication du fascicule du brevet :
17.07.91 Bulletin 91/29

(51) Int. Cl.⁵ : **B29C 65/02, F28F 9/18,**
**// B29L31:18**

(21) Numéro de dépôt : **88401257.6**

(22) Date de dépôt : **24.05.88**

(54) **Procédé de fixation de tube en résine thermoplastique dans un support thermoplastique - application à la fabrication d'échangeur thermique.**

(30) Priorité : 04.06.87 FR 8707799

(43) Date de publication de la demande :
28.12.88 Bulletin 88/52

(45) Mention de la délivrance du brevet :
17.07.91 Bulletin 91/29

(84) Etats contractants désignés :
AT BE CH DE FR GB IT LI NL SE

(56) Documents cités :
DE-A- 1 479 791
FR-A- 2 178 253
FR-E- 94 617
US-A- 3 315 740
US-A- 3 717 531

(73) Titulaire : **ATOCHEM**
**4 & 8, Cours Michelet La Défense 10**
**F-92800 Puteaux (FR)**

(72) Inventeur : **Duperray, Gilbert**
**Le Hameau**
**F-69380 Civrieux d'Azergues (FR)**
Inventeur : **Wolff, Daniel**
**123 Rue Duguesclin**
**F-69006 Lyon (FR)**
Inventeur : **Charmet, Jean-Paul**
**54, Rue de Moly**
**F-69230 St. Genis-Laval (FR)**

(74) Mandataire : **Foiret, Claude et al**
**ATOCHEM Département Propriété Industrielle**
**F-92091 Paris la Défense 10 Cédex 42 (FR)**

## Description

La présente invention concerne un procédé de fixation de tube fabriqué en résine thermoplastique dans un support lui-même fabriqué en résine thermoplastique selon le préambule de la revendication 1. Le procédé s'applique de façon particulièrement intéressante à la fabrication d'objet nécessitant un certain nombre de tubes fixés sur support comme c'est le cas pour les échangeurs thermiques tubulaires.

Lorsqu'il est nécessaire de réaliser un assemblage de tube de résine thermoplastique emboîté dans un support thermoplastique, la fixation des deux éléments s'effectue habituellement par collage ou par soudage à l'air chaud.

Le procédé par collage consiste à faire adhérer le tube au support au moyen d'une composition adhésive. L'opération est longue quand elle doit être répétitive au collage individuel d'un certain nombre de tubes au support. En outre ce procédé présente les inconvénients habituels aux collages tels que fixation souvent moins efficace qu'une soudure, ou encore limitations d'ordre thermique ou chimique introduites par la colle.

Le procédé de fixation par soudage consiste à faire fondre, au moyen d'un chalumeau à air chaud, une baguette de soudure en résine thermoplastique aux points de jonction du tube et du support. Cette technique présente l'inconvénient d'être longue lorsqu'il s'agit de fixer un certain nombre de tubes, l'opération de soudage devant être répétée autant de fois qu'il y a de tubes. En outre cette technique est particulièrement délicate dans sa réalisation quand les tubes à souder sont à parois minces ou sous forme capillaire. Pour limiter ces inconvénients il est proposé dans le US-A 3 315 740 de faire adhérer des tubes en faisceau dans un manchon par un traitement à chaud de l'ensemble à la température de ramollissement du thermoplastique. Ce traitement nécessite un appareillage complexe et pas moins de trois étapes : la première étape consiste à amener l'ensemble à température de ramollissement par chauffage électrique, la deuxième après refroidissement de l'ensemble à le réchauffer sous vide dans un bain de silicone chauffé sensiblement à 70% de la température de ramollissement, la troisième à traiter une nouvelle fois sous vide l'ensemble dans un nouveau bain, à température de ramollissement du thermoplastique.

Le procédé selon l'invention consistant à immerger au moins partiellement le support, dans lequel est placé le tube à lui fixer, dans un bain liquide à température au moins égale, et de préférence supérieure à celle du point de fusion de chacun des composants en résine thermoplastique, permet de réaliser rapidement la soudure entre le tube et son support sans apport de matière extérieure.

Ce procédé s'applique à toutes les résines thermoplastiques, éventuellement chargées, y compris celles présentant une viscosité élevée à l'état fondu comme en particulier le polytétrafluoréthylène (PTFE). Les matériaux constitutifs des tubes et du support peuvent être éventuellement différents à condition qu'ils soient compatibles et que leurs températures de fusion soient suffisamment voisines de façon à permettre leur soudage par polyfusion. On entend par tube tout corps creux de section géométrique constante suivant une direction donnée, mais ne présentant pas nécessairement une symétrie de révolution. Le support est de forme quelconque percé de part en part suivant une section complémentaire à celle du tube de façon à pouvoir l'y introduire.

Le tube est introduit dans le support de façon telle que son extrémité coïncide sensiblement avec la surface du support opposée à celle où le tube a été introduit. Tout en maintenant le tube dans le support, ce dernier, par la surface opposée à celle de l'introduction du tube, est immergé, au moins partiellement, dans le bain liquide.

En résumé le procédé est caractérisé en ce qu'on immerge au moins partiellement l'ensemble constitué de l'extrémité de tube emboîté dans le support dans un bain liquide à une température au moins égale à celle du point de fusion de chacune des résines thermoplastiques.

La hauteur d'immersion du support dans le liquide détermine la longueur finale de la soudure du tube sur le support, plus ou moins importante selon le niveau d'immersion.

Le support est laissé immergé dans le bain liquide pendant un temps suffisant pour que l'extrémité du tube à l'état fondu se soude sur la longueur désirée au support lui-même à l'état fondu. Le support, après retrait du bain liquide, est refroidi. Dans ces conditions de soudage il est constaté une liaison du tube et du support telle qu'en effectuant un essai de traction sur le tube, il y a rupture du tube avant celle de la soudure.

Le bain liquide doit nécessairement se trouver à une température au moins égale à la température de fusion du ou des polymères thermoplastiques constitutifs du ou des tubes et du support. Cette température du bain liquide est toutefois de préférence inférieure aux températures de décomposition de ces mêmes polymères.

Tous les produits inertes vis à vis des polymères immergés, se trouvant à l'état liquide et stables aux températures d'utilisation conviennent à la formation des bains liquides. Ce peuvent être par exemple des huiles lourdes, mais encore mieux des sels fondus tels que les nitrates ou nitrites de métaux alcalins et de préférence leurs mélanges qui permettent d'abaisser le point de fusion par formation d'un eutectique.

Les Figures annexées permettent de mieux expliciter l'invention.

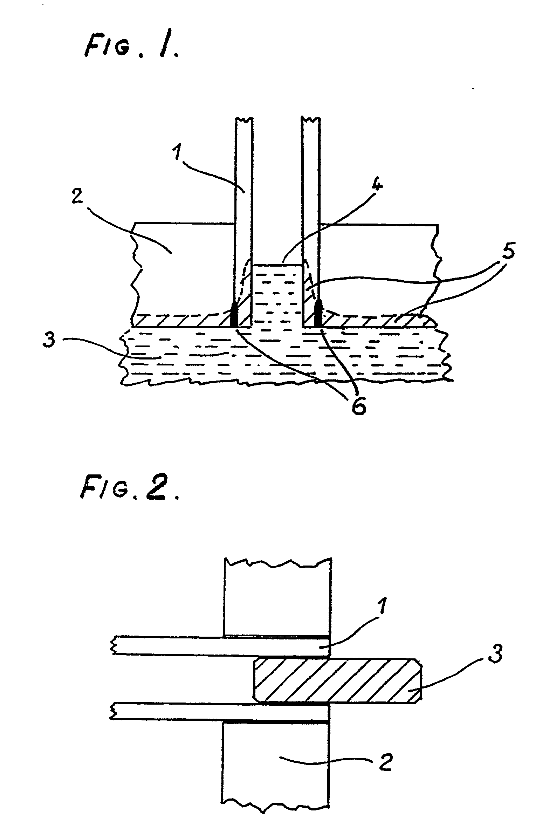

La Figure 1 montre le principe du procédé. Le tube 1 est emboîté dans le support 2 de façon telle qu'il vienne affleurer la face du support opposée à celle d'introduction. L'ensemble est plongé dans un bain fluide thermorégulé 3 maintenu à une température supérieure à celles de fusion des polymères de 1 et 2. Pendant l'immersion plus ou moins partielle du support le fluide remonte dans le tube d'une hauteur 4 correspondant sensiblement à celle de l'immersion. En laissant l'ensemble dans le fluide pendant une durée suffisante il se forme une zone 5 de polymères fondus entrainant la soudure 6 des éléments.

La Figure 2 montre une variante du procédé selon l'invention. En fonction des conditions opératoires choisies, des caractéristiques des polymères utilisés, et/ou de l'épaisseur des tubes, il peut être utile, afin d'éviter toute déformation éventuelle après mise en place du tube 1 dans le support 2 et avant immersion de l'ensemble dans le fluide de soudage, d'introduire dans le tube un goujon 3 de section complémentaire et dépassant éventuellement de l'extrémité du tube pour faciliter son retrait ultérieur. Ce goujon est réalisé en un matériau suffisamment conducteur de la chaleur tel que : acier, cuivre, aluminium. Dans ces conditions le goujon remplace d'une part le fluide du bain remontant dans le tube et d'autre part joue le rôle de conformateur dès que la température des polymères passent celles de leurs points de fusion et ce jusqu'au refroidissement de l'ensemble une fois sorti du bain. Le goujon est retiré après fusion et mieux avant refroidissement complet de l'ensemble. La section du goujon est de préférence telle qu'elle permette son introduction dans les tubes sans difficulté, tout en laissant un jeu entre tube et goujon.

Le procédé est particulièrement adapté au soudage de façon rapide et efficace de plusieurs tubes à un support comme c'est par exemple le cas dans la fabrication des échangeurs de chaleur.

Les exemples suivants illustrent l'invention sans toutefois la limiter.

EXEMPLE 1

Un tube de polypropylène de 20 mm. de diamètre et de 2,8 mm. d'épaisseur est emboîté dans un disque de polypropylène de 75 mm. de diamètre, de 25 mm. de hauteur et percé d'un trou de 20 mm. de diamètre. On met en place dans le tube un goujon en acier inoxydable de 14 mm. de diamètre et on plonge l'ensemble, sur une profondeur de 10 mm., dans un bain constitué d'un mélange d'hydroxydes, de nitrates et de nitrites alcalins à 260°C pendant 5 minutes. L'ensemble retiré du bain est refroidi.

A l'essai de traction, la rupture du tube ne se produit pas au niveau de la soudure.

EXEMPLE 2

Un tube de polyamide 12 de diamètre 12 mm. et de 1,5 mm. d'épaisseur est emboîté dans un trou de 12 mm. de diamètre percé dans un disque de polyamide 12 de 55 mm. de diamètre et de 30 mm. de hauteur. L'ensemble est plongé sur une profondeur de 5 mm. dans un bain constitué d'un mélange d'hydroxydes, de nitrates et de nitrites alcalins à 260°C pendant 5 minutes. L'ensemble retiré du bain est refroidi.

A l'essai de traction, la rupture du tube ne se produit pas au niveau de la soudure.

EXEMPLE 3

Un tube en polychlorotrifluoroéthylène de diamètre 10 mm. et de 1 mm. d'épaisseur est emboîté dans un trou de 10 mm. de diamètre percé dans un disque de polychlorotrifluoroéthylène de 80 mm. de diamètre et de 30 mm. de hauteur. L'ensemble est plongé sur une profondeur de 5 mm. dans un bain constitué d'un mélange d'hydroxydes, de nitrates et de nitrites alcalins à 295°C pendant 15 minutes. L'ensemble retiré du bain est refroidi.

A l'essai de traction, la rupture du tube ne se produit pas au niveau de la soudure.

Dans tous les exemples, le bain de soudage est un bain de sels fondus constitué d'un mélange d'hydroxydes, de nitrates et de nitrites alcalins.

EXEMPLE 4

10 tubes de polyfluorure de vinylidène de diamètre 4 mm. et de 0,4 mm. d'épaisseur sont emboités dans les 10 trous de 4 mm. de diamètre percés dans une plaque de polyfluorure de vinylidène de 20 × 40 mm et de 20 mm. de hauteur. Dans chacun des tubes on place des goujons en acier inoxydable de 3,1 mm. de diamètre. L'ensemble est plongé dans un bain constitué d'un mélange d'hydroxydes, de nitrates et de nitrites alcalins à 260°C pendant 3 minutes sur une profondeur de 3 mm. L'ensemble retiré du bain est refroidi.

A l'essai de traction, la rupture des tubes ne produit pas au niveau de la soudure.

EXEMPLE 5

On fabrique un échangeur de chaleur en emboîtant dans deux disques de polyfluorure de vinylidène de 95 mm. de diamètre et de 20 mm. de hauteur percés chacun de 153 trous de 4 mm. de diamètre chacune des extrémités de 153 tubes de polyfluorure de vinylidène de diamètre 4 mm., d'épaisseur de 0,4 mm. et de 185 mm. de longueur. On soude les tubes à chaque disque dans les conditions de l'exemple 4 en plongeant dans le bain de soudage l'un après l'autre chaque ensemble disque-tubes.

L'opération terminée il ne reste plus qu'à souder, dans les conditions habituelles l'enveloppe externe, ou la calandre, de l'échangeur à la périphérie de chaque disque.

Après avoir soumis l'échangeur à une pression extérieure aux tubes de 5 bars pendant 2 semaines, aucune fuite n'est constatée.

Sur banc d'essais, l'échangeur a été soumis à 500 cycles alternés eau froide à 17°C — vapeur d'eau à 120°C, la pression interne aux tubes étant de 2 bars, sans qu'aucune fuite ne soit constatée.

## Revendications

1. Procédé de fixation par soudure d'un tube en résine thermoplastique dans un support en résine thermoplastique consistant à emboiter l'extrémité du tube dans le support percé de part en part suivant une section complémentaire à celle du tube caractérisé en ce qu'on immerge au moins partiellement l'ensemble constitué de l'extrémité du tube emboité dans le support dans un bain liquide à une température au moins égale à celle du point de fusion de chacune des résines thermoplastiques.

2. Procédé selon la revendication 1 caractérisé en ce que le tube est introduit dans le support de façon telle que son extrémité coïncide sensiblement avec la surface du support opposée à celle où le tube a été introduit.

3. Procédé selon l'une des revendications 1 ou 2 caractérisé en ce que le bain liquide est constitué de sel métallique fondu.

4. Procédé selon l'une des revendications 1 à 3 caractérisé en ce qu'est placé dans l'extrémité du tube emboité dans le support un goujon conducteur de la chaleur de section complémentaire audit tube.

## Patentansprüche

1. Verfahren zur Befestigung eines Rohres aus thermoplastischem Harz in einem Träger aus termoplastischem Harz durch Schweißen, bestehend aus dem Einpassen des Rohrendes in den gemäß dem entsprechenden Rohrquerschnitt durchbohrten Träger, dadurch gekennzeichnet, daß man die durch das in den Träger eingepaßte Rohrende gebildete Einheit wenigstens teilweise in ein Flüssigbad mit einer Temperatur eintaucht, die wenigstens gleich dem Schmelzpunkt jedes einzelnen thermoplastischen Harzes ist.

2. Verfahren nach Anspruch 1, dadurch gekennzeichnet, daß das Rohr derart in den Träger eingeführt wird, daß sein Ende ungefähr mit der Trägeroberfläche abschließt, die der Einführungsseite des Rohres gegenüberliegt.

3. Verfahren nach Anspruch 1 oder 2, dadurch gekennzeichnet, daß das Flüssigbad aus einem geschmolzenem Metallsalz besteht.

4. Verfahren nach einem der Ansprüche 1 bis 3, dadurch gekennzeichnet, daß in das in den Träger eingepaßte Rohrende ein wärmeleitfähiger Stift mit diesem Rohr entsprechendem Querschnitt eingeführt wird.

## Claims

1. A process for fixing by welding a thermoplastic resin tube in a thermoplastic resin support, consisting in fitting the end of the tube into the support, which is pierced right through with a section complementary to that of the tube, characterized in that the assembly formed by the tube fitted into the support is at least partially immersed in a liquid bath at a temperature at least equal to the melting point of each of the thermoplastic resins.

2. A process according to claim 1, characterized in that the tube is so introduced into the support that its end substantially coincides with the surface of the support opposite to that at which the tube was introduced.

3. A process according to claims 1 or 2, characterized in that the liquid bath is formed by molten metallic salt.

4. A process according to one of claims 1 to 3, characterized in that a heat conducting pin whose section is complementary to that of the tube is placed in the end of the tube fitted into the support.

FIG. 1.

FIG. 2.